Europäisches Patentamt

(19) European Patent Office

Office européen des brevets

(11) Publication number: **0 152 968**
**B1**

(12) EUROPEAN PATENT SPECIFICATION

(45) Date of publication of patent specification: **08.06.88**

(21) Application number: **85200014.0**

(22) Date of filing: **10.01.85**

(51) Int. Cl.⁴: **H 02 K 19/28,** H 02 P 9/38

(54) **Self-excited alternator.**

(30) Priority: **27.01.84 AU 3374/84**

(43) Date of publication of application:
**28.08.85 Bulletin 85/35**

(45) Publication of the grant of the patent:
**08.06.88 Bulletin 88/23**

(84) Designated Contracting States:
**DE FR GB IT SE**

(56) References cited:
**DE-A-1 563 154**
**DE-A-2 047 208**
**DE-B-1 638 413**
**DE-B-1 638 894**
**US-A-4 117 388**

(73) Proprietor: **N.V. Philips' Gloeilampenfabrieken
Groenewoudseweg 1
NL-5621 BA Eindhoven (NL)**

(72) Inventor: **Graham, Gary
c/o INT. OCTROOIBUREAU B.V. Prof. Holstlaan 6
NL-5656 AA Eindhoven (NL)**

(74) Representative: **Schrijnemaekers, Hubert
Joannes Maria et al
Internationaal Octrooibureau B.V. Prof.
Holstlaan 6
NL-5656 AA Eindhoven (NL)**

Courier Press, Leamington Spa, England.

## Description

The present invention relates to a self-excited alternator of the brushless type, comprising a main rotary field winding (F1) magnetically coupled with a main stator output winding (W) for inducing an output voltage in the output winding (W) when excited, an alternating current exciter for exciting the field winding F1, provided with exciter primary stator winding means (F2, F3), one or more exciter secondary windings (U1, U2, U3) magnetically coupled with the exciter primary stator winding means (F2, F3) and mounted to be rotated with the field windings (F1) and permanently connected with the field winding (F1) via rotary rectifying means (D1, ..., D6) also mounted to be rotated with the field winding (F1) the alternator further being provided with a rotary feedback winding system containing a rotary auxiliary winding (F5) connected in series with the main rotary winding (F1) and mounted to rotate therewith for producing a rotary auxiliary magnetic field, an auxiliary stator winding (V) magnetically coupled with the rotary feedback winding (F5), and auxiliary exciting means (D7, ..., D10) for deriving an auxiliary executing current for the exciter primary stator winding means (F2, F3) by rectifying the current induced in the auxiliary stator winding (V).

Such self-excited alternator is known from DE—B—1.638.894. In the known self-excited alternator the output voltage is regulated by means of an electronically controlled regulator adjusting the exciting current in dependence on the output voltage so as to compensate for the variations of the electric load of the alternator. Although electronically controlled regulators have the advantage of being very accurate, they will not always operate reliably under adverse conditions of extreme temperatures (for example between −15°C to +50°C) and/or high humidity and/or salt-laden or dust-laden atmosphere, for instance in atmosphere laden with conductive or dust such as may be encountered in mining sites. In this respect, brushless alternators are frequently put to use in locations where extreme operating conditions prevail. Performance reliability is particularly important in such locations where it is frequently difficult to obtain trained personnel capable of servicing electronic equipment and where the brushless alternator concerned is the only means of obtaining electric power supplied at the location.

It is an object of the invention to provide a self-excited alternator according to the opening paragraph which has a more reliable voltage regulation and which can be simply serviced.

A self-excited alternator in accordance with the invention is characterized in that the exciter primary winding means comprises a first winding F2 connected to the auxiliary exciting means to be directly excited by the auxiliary exciting current, a second winding (F3) and a stabilizing means connected between the output winding and the second winding (F3) for exciting the second winding (F3) by a current sensitive to the output voltage in order to stabilize the amplitude of the output voltage.

The voltage regulation system of the self-excited alternator according to the invention can be realized with a minimum of electronic components, resulting in an increase of a reliability and servicability.

The rotary feedback winding system via which the said auxiliary excitation current is derived from the auxiliary field produced by the said rotary auxiliary winding may be proportioned so that a small excess of available auxiliary excitation current is produced to ensure exciter voltage and alternator output voltage buildup. When so proportioned, a cancellation means sensitive to the alternator terminal voltage is required for cancelling the effects of excess excitation above a predetermined output voltage. Such cancellation means are generally known and may take any one of the several forms. In one form of cancellation means there is provided a monitoring means for monitoring the output voltage of the brushless alternator so that in response to the monitored output voltage exceeding a predetermined level, a counteracting current is supplied to the second winding of the exciter primary winding means in a direction opposing the effect of the said auxiliary excitation current.

Alternatively, the rotary feedback winding system via which the said auxiliary excitation current is derived from the auxiliary field produced by the said rotary auxiliary winding may be proportioned so that the magnitude of auxiliary excitation current produced thereby is less than the magnitude required for output voltage buildup and wherein a current reinforcing means sensitive to the output voltage of the alternator is provided for supplying current reinforcing the effects of the said auxiliary excitation current below a predetermined output voltage, with resultant output voltage build-up. Again, such reinforcing means may take any one of several forms. One form of current reinforcing means includes a monitoring means for monitoring the output voltage of the alternator so that in response to the monitored output voltage being less than a predetermined level, a supplementary current is supplied to the second winding of the exciter primary winding means in a direction reinforcing the effects of the said primary excitation current.

In a brushless alternator in accordance with the invention, it may be desirable to provide a second rotary feedback winding which is fixed relative to the first mentioned feedback winding and located in proximity thereto so that the magnetic field produced by the second feedback winding is superimposed upon the said auxiliary magnetic field, current proportional to the main field voltage being supplied to the second feedback winding thereby providing compensation for resistance changes of the alternator main field winding resulting from temperature variation.

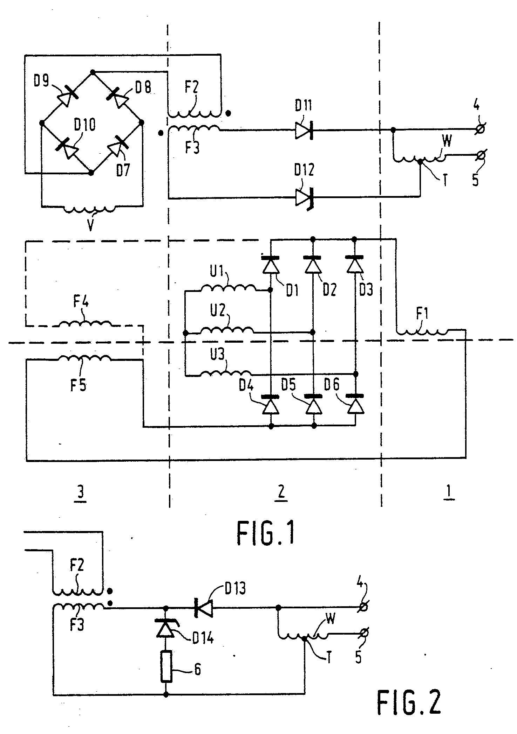

The invention will now be described with reference to the accompanying drawings, in which Figure 1 is a diagrammatic representation of a brushless alternator embodying the invention.

Figure 2 is a diagram showing a variation to portion of Figure 1 for explaining the operation of a different brushless alternator also embodying the invention.

The single-phase brushless alternator illustrated schematically in Figure 1 comprises an output section 1, an exciter section 2 and a feedback alternator section 3 which are accommodated in an alternator housing which is not shown in the Figure. The main rotary field winding F1, the three exciter secondary windings U1, U2 and U3 and the rotary feedback winding F5 are all mounted on a rotor constructed so as to be rotated from a driving source about an axis within the housing and symbolized by the dotted line D.S. The rotor on which the windings F1, U1, U2, U3 and F5 are mounted has three separate sets of laminations accommodating the respective windings so that the main rotary field winding F1 is wound one set of laminations associated with the output section 1, the exciter windings U1, U2 and U3 are wound on another set of laminations associated with the exciter section 2 and the feedback winding F5 is wound on the remaining set of laminations associated with the feedback alternator section 3. The main stator output winding W, the windings F2 and F3 and the auxiliary stator winding V are respectively located and disposed within the alternator housing in a conventional manner so that the winding W functions as a single-phase output winding magnetically coupled with the main rotary field winding F1, the windings F2 and F3 function as exciter primary windings magnetically coupled with the exciter secondary windings U1, U2 and U3 and the winding V functions as a feedback secondary winding magnetically coupled with the rotary feedback winding F5.

The exciter section 2 operates as a conventional generator wherein a primary magnetic field set up by the windings F2 and F3 results in generation of voltages in the three-phase secondary windings U1, U2 and U3 which are connected to the main field winding F1 via the rotary three-phase rectifier system constituted by the rectifiers D1, D2, D3, D4, D5 and D6. The winding F5 of the feedback alternator section 3 is connected in series with the main rotary field winding F1 across the output of the rectifier system constituted by the rectifiers D1—D6. By means of a full wave rectifier system constituted by the rectifiers D7, D8, D9 and D10, the auxiliary stator winding V of the feedback alternator section 3 is connected to supply excitation current to the exciter primary winding F2.

Alternator output terminals 4 and 5 are connected to opposite ends of the single-phase output winding W and the end of the output winding W remote from the terminal 5 is connected via the diode D11 to one end of the winding F3. A tapping T provided on the winding W is connected via a zener diode D12 to the other end of the winding F3 so that when the voltage produced between the terminal 4 and the tapping T is of sufficient magnitude for the zener voltage of the diode D12 to be exceeded, a counteracting current is produced in the winding F3.

Operation of the brushless alternator of Figure 1 is as follows. Owing to the residual magnetism of stationary parts of the alternator, when the alternator rotor is driven small voltages are generated across the windings U1, U2 and U3 which cause a small rectified current to flow in the windings F1 and F5. Current through the winding F5 produces a magnetic field Mr which is fixed relative to the rotor. As the magnetic field Mr moves relative to the stator winding V, a voltage directly proportional to the level of the current in the winding F5 is generated across the winding V. The alternating voltage developed across the winding V is fed to the rectifier bridge composed of the rectifiers D7—D10 and the rectified output of the bridge is supplied as excitation current to the exciter primary winding F2.

Movement of the rotor within the exciter field produced by current flow in the winding F2 results in increased voltages being produced across the respective windings U1, U2 and U3 and rectification of these voltages by the rectification system constituted by the rectifiers D1—D6 causes a flow of current in the main field winding F1 and also in the feedback winding F5. The magnetic flux due to the flow of rectified current in the rotary main field winding F1 causes an alternating voltage to be produced across the single phase output winding W and the simultaneous flow of rectified current through the winding F5 further increases the strength of the magnetic field Mr.

The winding V is designed so that its output voltage is slightly in excess of the voltage required to maintain the excitation current in the winding F2. In this way, a build-up of excitation current and of the alternator terminal voltage is ensured.

It will be appreciated that the strength of the stationary magnetic field of the exciter section 2 of the alternator determines the level of the voltages generated across the windings U1, U2 and U3 and hence determines the level of the rectified voltage developed across the windings F1 and F5 and the level of the alternating output voltage produced across the terminals 4 and 5.

The winding F3, the diode D11, the zener diode D12 and the associated circuitry function as a monitoring circuit provided for the purpose of limiting the alternator terminal voltage build-up to a predetermined level. So long as the voltage produced between the terminal 4 and the tapping T of the winding W is insufficient for the zener voltage of the zener diode D12 to be exceeded, there is no current flow in the winding F3. However, when the zener voltage of the diode D12 is exceeded, the resultant flow of current in the winding F3 is in a direction so as to oppose the effect of the flow of excitation current in the winding F2. Accordingly, the maximum level of the alternator terminal voltage developed across the terminals 4 and 5 is governed inter alia by the characteristics of the zener diode D12 and of the winding F3. Those characteristics should be chosen to suit the terminal voltage required.

The feedback system from the output section 1 to the winding F2 via the feedback alternator section 3 acts to increase or decrease the excitation level produced by the winding F2 in accordance with variations of the load across the output terminals 4 and 5.

Owing to electromagnetic induction, any load changes across the output terminals 4 and 5 of the alternator of Fig. 1 are accompanied by an immediate change of current flow in the winding F1. That is to say, in response to load changes affecting the magnetic field due to the winding F1, current will be induced into the winding F1 having a direction such as to neutralize the change of magnetic flux. Thus, a step increase in the load across the terminals 4 and 5 promotes a step increase of the current in the winding F1. The magnitude of the change of current in the winding F1 is directly related to the change of load or power factor and simultaneously a corresponding change in the magnetic field Mr of the winding F3 and of the alternating voltage developed across the winding V are produced thereby changing the current through the winding F2 and changing the excitation required to maintain the new level of current flow through the winding F1. In this way, the required excitation for any load condition, regardless of magnitude or power factor, is generated by the feedback system of the alternator of Figure 1.

With the brushless alternator of Figure 1, changes of the resistance of the main field winding F1 that occur as a result of temperature changes can be compensated by appropriate changes of excitation voltage across the winding F1 to maintain the same current flow. Since the voltage developed across the main field winding F1 varies in accordance with such resistance changes, such compensation may be brought about by the provision of a second feedback winding connected as shown by the portion of Figure 1 marked by dotted lines and denoted by the letters F4. The second feedback winding F4 is wound on the same laminations on the rotor as is the feedback winding F5 in a manner such that the magnetic field produced by the winding F4 is superimposed upon that of the winding F5. The winding F4 is connected in parallel with the series combination of the winding F1 and the winding F5. Accordingly, the flow of current through the winding F4 varies in accordance with the main field voltage and as a consequence a component of the resultant excitation current produced in the winding F2 varies in accordance with the temperature of the main field winding F1.

When a second feedback winding is provided as shown by the winding F4, correct relative proportioning of the windings F4 and F5 is important. The size of the winding F5 should predominant since the field current feedback is the most significant compensation required.

For temperature compensation, the provision of a second feedback winding such as the winding F4 is not essential. As an alternative, satisfactory temperature compensation can be provided by a proportioning of the winding V so that a larger feedback voltage is generated across the winding V thereby increasing the gain of the feedback loop. However, with such an arrangement a higher level of counteracting current will be produced by the control winding F3 at lower operating temperatures thereby reducing overall efficiency.

With the brushless alternator of Figure 1, compensation for the increased voltage drop across the main output winding W which occurs with increase of output current may be provided by a corresponding increase of the current flow in the main field winding W. Such compensation may be achieved by design of the winding V to provide the necessary excess excitation.

In the brushless alternator so far described with reference to Figure 1, the magnetic circuit of the feedback alternator section 3 is separate from that of the exciter section 2. However, the invention is not limited to such a construction. For instance, it is completely feasible to have a construction in which the feedback section shares the same magnetic circuit as that for the exciter section. In this respect, it will be appreciated that the direction of power transfer for excitation is opposite to that for feedback. The shape of the laminations employed in the rotor and for the other parts of the common magnetic circuit will preferably be designed for efficient bi-directional transfer of power. It is also theoretically possible for all the rotary windings to be wound on a common set of laminations provided on the rotor. Such a construction is also intended to be encompassed within the scope of the present invention.

An advantage of the embodiments of the invention described with reference to Figure 1 is that the basic structure of the brushless alternator also accommodates the main elements for regulation of the alternator output thereby reducing total manufacturing costs. In this respect, all winding operations are able to be carried out on the same machines and the same laminations are able to be used in many instances. In addition, the additional assembly time required with the known arrangements employing external regulation systems, is eliminated. A further advantage is that even though a brushless alternator in accordance with the invention requires excess excitation for stability of voltage regulation, compared with the known systems a more precise system is available for compensation of power factor, load and temperature which enables the excess excitation to be kept to a very low level thus minimizing losses and providing improved electrical efficiency.

The foregoing description in relation to Figure 1 is based upon a design in which the voltage produced by the winding V exceeds that required to maintain the excitation current in the winding F2.

In the alternative case of an alternator design in which the magnitude of the excitation current in the winding F2 is insufficient for build-up of the excitation current and of the alternator terminal voltage, the arrangement of Figure 1 may be modified by the portion of Figure 1 comprising the winding F3, the output winding W and the diodes D11 and D12 being replaced by an arrangement as depicted by Figure 2. In Figure 2, similar parts are denoted by similar letters or numbers. With the arrangement of Figure 2, current from that portion of the alternator output winding W extending between the tapping T and the terminal 4 is rectified by a diode D13 and supplied as supplementary current to the winding F3 in a direction reinforcing the effects of the flow of excitation current in the winding F2. In addition, the arrangement of Figure 2 provides a monitoring system controlling the supply of supplementary currents to the winding F3.

The winding F3 is shunted by the series combination of a zener diode D14 and a resistance 6, the characteristics of the zener diode D14, taking into account the associated circuitry, being appropriate to the terminal voltage desired across the output terminals 4 and 5. In this respect, the zener voltage of the zener diode D14 provides a reference for operation of the circuit of Figure 2.

It will be appreciated that with an alternator according to Figure 1 and modified in accordance with Figure 2, during initial start up, owing to the effects of residual magnetism in the alternator a voltage is developed across the output winding W and hence across the portion of the winding between the tapping T and the terminal 4. Since the magnitude of the excitation current flow in the winding F2 is of insufficient magnitude for alternator voltage build-up, initially the voltage developed across the output winding W will not reach the desired alternator terminal voltage and the voltage developed between the tapping T and the terminal 4 will be less than the zener voltage of the diode D14. Notwithstanding, rectified current flow via the winding F3 reinforces the effects of the excitation current flowing in the winding F2 which, relative to the position of the tapping T on the winding W, should be proportioned so that the sum of the effects of current flow in the windings F2 and F3 is sufficient for alternator voltage build-up.

It is evident that with alternator voltage build-up, a stage will be reached at which the voltage developed across the portion of the winding W between the tapping T and the terminal 4 exceeds the zener voltage of the diode D14. Under such conditions, owing to break-down of the zener diode D14, the flow of rectified current supplied by the rectifier D13 will be divided between a path provided by the winding F3 and a path provided by the series combination of the diode D14 and the resistance 6. The relative impedances of the two paths should be such that division of the rectified current between the two paths will cause the level of the alternator voltage to decay until the zener voltage is no longer exceeded whereupon the whole of the rectified current flows via the winding F3 once more and the process is repeated. Accordingly, the alternator terminal voltage developed across the output terminals 4 and 5 becomes stabilised at a desired level dictated by the characteristics of the diode D14, the value of the resistance 6 and the resistance of the winding F3.

As a variation of the basic system provided by the arrangement described in connection with Figure 2 a source of direct current, for example a battery, may be provided in lieu of the portion of the output winding between the tapping T and the terminal 4 in combination with the rectifier D13. With such a variation, the system is no longer dependent upon the effects of residual magnetism for initial voltage build-up but suitable modification of the monitoring system of the arrangement of Figure 2 must be made for similarly limiting the supply of reinforcing current fed to the winding F3 at a level corresponding with a predetermined level of alternator terminal voltage so that the alternator voltage is thereby stabilised in a basically similar manner.

An alternator in accordance with the invention and of the kind described in relation to Figure 1 has the disadvantage that alternator voltage build-up may reach a dangerous level in the event of failure of the monitoring system provided by the diodes D11 and D12 or of failure of the winding F3. In comparison, an alternator of the kind described in relation to Figure 2 may be designed so that in the event of failure, alternator voltage build-up is limited to a relatively safe level.

Many other variations of the embodiments of the invention described in relation to the brushless alternators of Figure 1 and Figure 2 are possible.

For instance, the brushless alternator described in relation to Figure 1 has a single-phase output winding. The principles of the invention are equally applicable to a brushless alternator equipped with two or more output windings for producing alternating voltages having a phase difference therebetween. Alternatively, the monitoring system referred to in relation to the brushless alternator of Figure 1 and constituted by the winding F3 and the diodes D11 and D12 in combination with portion of the output winding W may be of a different form. Other methods of producing a counteracting current in response to the terminal voltage exceeding a predetermined level are known.

Likewise, variations of the reinforcing means and/or the monitoring system described in relation to the arrangement of Figure 2 will be evident to persons skilled in the art.

**Claims**

1. A self-excited alternator of the brushless type, comprising a main rotary field winding (F1) magnetically coupled with a main stator output winding (W) for inducing an output voltage in the output winding (W) when excited, an alternating current exciter for exciting the field winding F1, provided with exciter primary stator winding means (F2, F3), one or more exciter secondary windings (U1, U2, U3) magnetically coupled with the exciter primary stator winding means (F2, F3) and mounted to be rotated with the field windings (F1) and permanently connected with the field winding (F1) via rotary rectifying means (D1, ..., D6) also mounted to be rotated with the field winding (F1) the alternator further being provided with a rotary feedback winding system containing a rotary auxiliary winding (F5) connected in series with the main rotary winding (F1) and mounted to rotate therewith for producing a rotary auxiliary magnetic field, an auxiliary stator winding (V) magnetically coupled with the rotary feedback winding (F5), and auxiliary exciting means (D7, ..., D10) for deriving an auxiliary exciting current for the exciter primary stator winding means (F2, F3) by rectifying the current induced in the auxiliary stator winding (V), characterized in that the exciter primary winding means comprises a first winding (F2) connected to the auxiliary exciting means (D7, ..., D10) to be directly excited by the auxiliary exciting current, a second winding (F3) and a stabilizing means (D11, D12, 6, D13, D14) connected between the output winding (W) and the second winding (F3) for exciting the second (W) winding (F3) by a current sensitive to the output voltage in order to stabilize the amplitude of the output voltage.

2. Self-excited alternator as claimed in Claim 1, wherein the said rotary feedback winding system is proportioned so that the magnitude of primary excitation current produced thereby is sufficient for output voltage build-up and wherein the stabilizing means (D11, D12) comprises means to cancel the effects of excess excitation above a predetermined output voltage.

3. A self-excited alternator as claimed in Claim 2, wherein the said cancellation means includes a monitoring means (D12) for monitoring the output voltage of the alternator so that in response to the monitored output voltage exceeding a predetermined level, a counteracting current is supplied to the second winding (F3) of the exciter primary winding means in a direction opposing the effects of the said auxiliary excitation current.

4. A self-excited alternator as claimed in Claim 1, wherein the said rotary feedback winding system is proportioned so that the magnitude of auxiliary excitation current produced thereby is less than the magnitude required for output voltage build-up and wherein the stabilizing means (D13, D14, 6) are provided with means for supplying current reinforcing the effects of the said auxiliary excitation current below a predetermined output voltage with resultant output voltage build-up.

5. A self-excited alternator as claimed in Claim 4, wherein said current reinforcing means includes a monitoring means (D14, 6) for monitoring the output voltage so that in response to the monitored output voltage being less than a predetermined level, a supplementary current is supplied to the second winding (F3) of the exciter primary winding means in a direction reinforcing the effects of the said auxiliary excitation current.

6. A self-excited alternator as claimed in any one of the preceding Claims, characterized in that there is provided a second rotary feedback winding (F4) which is fixed relative to the first mentioned feedback winding (F5) and located in proximity thereto so that the magnetic field produced by the second feedback winding (F4) is superimposed upon the said auxiliary magnetic field, a current proportional to the main field voltage being supplied to the second feedback winding (F4) thereby providing compensation for resistance changes of the alternator main field winding (F1) resulting from temperature variation.

**Patentansprüche**

1. Selbsterregter bürstenloser Generator mit einer Drehfeldwicklung (F1), die mit einer Ständerausgangswicklung (W) zum Induzieren einer Ausgangsspannung in die Ausgangswicklung (W) beim Erregen magnetisch gekoppelt ist, mit einem Wechselspannungserreger zum Anregen der Feldwicklung (F1), der mit primären Ständerwicklungsmitteln (F2, F3) und mit einer oder mehreren Sekundärwicklungen (U1, U2, U3) ausgerüstet ist, die mit den primären Ständerwicklungsmitteln (F2 und F3) magnetisch gekoppelt sind und zum Drehen mit den Feldwicklungen (F1) angeordnet und mit der Feldwicklung (F1) über Drehungsgleichrichtermittel (D1 ... D6) ununterbrochen verbunden sind, die ebenfalls mit der Feldwicklung (F1) zu verdrehen sind, wobei der Generator weiter mit einem drehbaren Rückkopplungswicklungssystem mit einer drehbaren Hilfswicklung (F5) in Reihenschaltung mit der Hauptdrehungswicklung (F1) versehen und zum gleichzeitigen Drehen damit zum Erzeugen eines drehbaren Hilfsmagnetfelds angeordnet ist, und eine Hilfsständerwicklung (V), die mit der drehbaren Rückkopplungswicklung (F5) magnetisch gekoppelt ist, und Hilfserregermittel (D7 ... D10) zum Ableiten eines Hilfserregerstroms für die primären Ständerwicklungsmittel (F2, F3) durch Gleichrichten des in die Hilfsständerwicklung (V) induzierten Stroms enthält, dadurch gekennzeichnet, dass die primären Erregerwicklungsmittel eine erste Wicklung (F2), die an die Hilfserregermittel (D7 ... D10) zum direkten Anregen durch die Hilfserregerstrom angeschlossen ist, eine zweite Wicklung (F3) und einen Stabilisator (D11, D12, 6, 13, D14) enthält, der zwischen der Ausgangswicklung (W) und der zweiten Wicklung (F3) zum Erregen der zweiten Wicklung (F3) durch einen für die Ausgangsspannung empfindlichen Strom angeschlossen ist, um die Amplitude der Ausgangsspannung zu stabilisieren.

2. Selbsterregter Generator nach Anspruch 1, dadurch gekennzeichnet, dass das drehbare Rückkopplungswicklungssystem derart bemessen ist, dass die Grösse des dabei erzeugten primären Erregerstroms zum Aufbauen einer Ausgangsspannung ausreicht, und dass der Stabilisator (D11, D12) Mittel zum Unterdrücken der Auswirkungen von Übererregung über einer vorgegebenen Ausgangsspannung enthält.

3. Selbsterregter Generator nach Anspruch 2, dadurch gekennzeichnet, dass der Unterdrücker einen Überwacher (D12) zum Überwachen der Ausgangsspannung des Generators enthält, so dass in Beantwortung der überwachten Ausgangsspannung über einem vorgegebenen Pegel ein Gegenwirkstrom an die zweite Wicklung (F3) der primären Erregerwicklung in einer Richtung angelegt wird, die den Auswirkungen des Hilfserregerstroms entgegengesetzt ist.

4. Selbsterregter Generator nach Anspruch 1, dadurch gekennzeichnet, dass das drehbare Rückkopplungswicklungssystem derart bemessen ist, dass die Grösse des dabei erzeugten Hilfserregerstroms kleiner als die für den Aufbau der Ausgangsspannung erforderliche Grösse ist, und dass der Stabilisator (D13, D14, 6) mit einem Mittel zum Stromerzeugen versehen ist, das die Auswirkungen des Hilfserregerstroms unter einen vorgegebenen Ausgangsspannung mit einem resultierenden Ausgangsspannungsaufbau verstärkt.

5. Selbsterregter Generator nach Anspruch 4, dadurch gekennzeichnet, dass das Stromverstärktungsmittel einen Überwacher (D14, 6) zum Überwachen der Ausgangsspannung enthält, so dass in Beantwortung der überwachten Ausgangsspannung unter einem vorgegebenen Pegel ein ergänzender Strom an die zweite Wicklung (F3) der primären Erregerwicklung in einer Richtung angelegt wird, die die Auswirkungen des Hilfserregerstroms verstärkt.

6. Selbsterregter Generator nach einem oder mehreren der vorangehenden Ansprüche, dadurch gekennzeichnet, dass eine zweite drehbare Rückkopplungswicklung (F4) vorgesehen ist, die in bezug auf die erstgenannte Rückkopplungswicklung (F5) festgesetzt und in ihrer Nähe angeordnet ist, so dass das von der zweiten Rückkopplungswicklung (F4) erzeugte Magnetfeld dem Hilfsmagnetfeld überlagert wird, wobei ein der Hauptfeldspannung proportionaler Strom an die zweite Rückkopplung (F4) gelegt wird, wobei solche Widerstandsänderungen in der Generatorhauptfeldwicklung (F1) ansgeglichen werden, die durch Temperaturschwankungen entstehen.

**Revendications**

1. Alternateur auto-excité du type sans belais comportant un enroulement inducteur rotatif principal (F1) couplé magnétiquement à un enroulement statorique principal de sortie (W) pour induire une tension de sortie dans l'enroulement de sortie (W) lors de son excitation, et une excitatrice à courant continu servant à exciter l'enroulement inducteur F1 et muni de moyens à enroulements statoriques primaires d'excitatrice (F2, F3), un ou plusieurs enroulements secondaires d'excitatrice (U1, U2, U3) couplés magnétiquement aux moyens à enroulements statoriques primaires d'excitatrice (F2, F3) et prévus pour tourner conjointement avec les enroulements inducteurs (F1) et reliés de façon permanente à l'enroulement inducteur (F1) à travers des moyens redresseurs rotatifs (D1, ... D6) également prévus pour tourner conjointement avec l'enroulement inducteur (F1), l'alternateur étant encore muni d'un système rotatif d'enroulements de réaction comportant un enroulement auxiliaire rotatif (F5) disposé en série avec l'enroulement rotatif principal (F1) et prévu pour tourner conjointement avec celui-ci pour engendrer un champ magnétique auxiliaire rotatif, d'un enroulement statorique auxiliaire (V) couplé magnétiquement à l'enroulement de réaction rotatif (F5) et de moyens d'excitation auxiliaires (D7, ... D10) pour déduire un courant d'excitation auxiliaire pour les moyens à enroulements statoriques primaires d'excitatrice (F2, F3) par redressement du courant induit dans l'enroulement statorique auxiliaire (V), caractérisé en ce que les moyens à enroulements primaires d'excitation comportent un premier enroulement F2 relié aux moyens d'excitation auxiliaires de façon à être directement excités par le courant d'excitation auxiliaire, un second enroulement (F3) et des moyens de stabilisation intercalés entre l'enroulement de sortie et le second enroulement (F3) pour exciter le second enroulement (F3) par un courant sensible à la tension de sortie afin de stabiliser l'amplitude de la tension de sortie.

2. Alternateur auto-excité selon la revendication 1, dans lequel ledit système rotatif d'enroulements de réaction est dimensionné de façon que l'intensité du courant d'excitation primaire fourni par celui-ci suffise pour établir la tension de sortie et dans lequel les moyens de stabilisation (D11, D12) comportent des moyens pour annuler les effets d'une surexcitation au-dessus d'une tension de sortie prédéterminée.

3. Alternateur auto-excité selon la revendication 2, dans lequel lesdits moyens d'annulation comportent des moyens de contrôle (D12) pour contrôler la tension de sortie de l'alternateur de façon que, si la tension de sortie contrôlée dépasse un niveau prédéterminé, un courant antagoniste soit fourni au second enroulement (F3) des moyens à enroulements primaires d'excitatrice dans une direction s'opposant aux effets dudit courant d'excitation auxiliaire.

4. Alternateur auto-excité selon la revendication 1, dans lequel ledit système rotatif d'enroulements de réaction est dimensionné de façon que l'intensité du courant d'excitation auxiliaire fourni par celui-ci soit inférieure à l'intensité nécessaire pour l'établissement de la tension de sortie, et dans lequel les moyens de stabilisation (D13, D14, 6) sont munis de moyens pour fournir un courant renforçant les effets dudit courant d'excitation auxiliaire au-dessous d'une tension de sortie prédéterminée, de façon à provoquer l'établissement d'une tension de sortie.

5. Alternateur auto-excité selon la revendication 4, dans lequel lesdits moyens pour fournir un courant de renforcement comportent des moyens de contrôle (D14, 6) pour contrôler la tension de sortie de façon que, si la tension de sortie contrôlée est inférieure à un niveau prédéterminé, un courant supplémentaire soit fourni au second enroulement (F3) des moyens à enroulements primaires d'excitatrice dans une direction renforçant les effets dudit courant d'excitation auxiliaire.

6. Alternateur auto-excité selon l'une quelconque des revendications précédentes, caractérisé en ce qu'il est prévu un second enroulement rotatif de réaction (F4), immobile par rapport à l'enroulement de réaction mentionné en premier lieu (F5) et situé à proximité de celui-ci, de sorte que le champ magnétique engendré par le second enroulement de réaction (F4) est superposé audit champ magnétique auxiliaire, un courant proportionnel à la tension inductrice principale étant fourni au second enroulement de réaction (F4) de façon à compenser des variations de résistance de l'enroulement inducteur principal (F1) de l'alternateur, provoquées par une variation de température.

FIG.1

FIG.2